# EUROPEAN PATENT APPLICATION

(11) **EP 2 398 287 A2**
(43) Date of publication of application: **21.12.2011**
(21) Application number: 11170179.3
(22) Date of filing: 16.06.2011
(51) Int. Cl.: H04W 52/02

(54) **Radio communications apparatus and method**

(30) Priority: 17.06.2010 JP 2010138316
(71) Applicant: Ricoh Company, Ltd., Tokyo 143-8555 (JP)
(72) Inventor: Shiotani, Yoshimitsu, Tokyo, 143-8555 (JP)
(74) Representative: Schwabe - Sandmair - Marx

(57) **Abstract**

A radio communications apparatus having multiple radio equipment units is disclosed. The radio communications apparatus includes a radio equipment selecting unit which selects one of the radio equipment units based on a received quality in each of the radio equipment units when transferring to a power saving state; and a radio equipment control unit which operates the radio equipment unit selected by the radio equipment selecting unit and stops a radio equipment unit other than the selected radio equipment unit.

## Description

### TECHNICAL FIELD

The present invention generally relates to radio communications apparatuses and methods, and specifically relates to radio communications apparatuses and methods for conducting radio communications according to wireless LAN (local area network) standards.

### BACKGROUND ART

A wireless LAN makes it possible to eliminate cabling of a wired LAN. Moreover, the wireless LAN makes it possible to conduct radio communications without being restricted with respect to location to a certain extent. Given the advantages as described above, the wireless LAN technique will increasingly attract attention in the future.

Recently, performance of communications terminal apparatuses is improving. Moreover, various electronic equipment units are now provided with a network interface. With the improving performance of the communications terminal apparatuses, and an increase in electronic equipment units with the network interface, the network traffic volume is more and more increasing.

In order to respond to a state of a growing network traffic volume, an increased speed in the wireless LAN is being called for- In order to respond to the increased speed in the wireless LAN, IEEE (The Institute of Electrical and Electronics Engineers) 802.11n-2009 standards were established in 2009, which standards require MIMO (Multi-Input Multi-Output) transmission techniques that feature conducting communications using multiple transmit and receive antennas/radio equipment units.

At the same time high-speed network communications are called for, saving power is also called for as a mandatory technique with the advent of a large number of mobile electronic equipment units with a wireless LAN interface.

IEEE 802.11n also specifies power management functions. As one of the power management functions, a power saving function at the time of space multiplexing is specified. With the power saving function at the time of space multiplexing, in a power saving state, one radio equipment unit is left with power turned on to conduct radio communications, turning off the power of radio equipment units other than the one radio equipment unit which is conducting the radio communications. The power of the radio equipment units other than the one radio equipment unit which is conducting the radio communications is turned off to achieve power saving.

For the power saving functions at the time of the space multiplexing are specified two types, a static mode and a dynamic mode.

In the static mode, at the time of transferring from a power saving state in which only one radio equipment unit operates to a normal operating state in which the other radio equipment units are also operated, the radio communications apparatus reports, to an access point, that it is transferring to the normal operating state. Until there is such a report, the access point uses one spatial stream.

In the dynamic mode, when a frame is received which is destined for a specific radio communications apparatus, there is an immediate transfer from the power saving state in which the one only radio communications equipment unit operates to the normal operating state in which the other radio equipment units are also operated. When all frames are received, only the one radio equipment unit is operated once again, transferring to the power saving state, which turns off the other radio equipment units.

### DISCLOSURE OF THE INVENTION

In the power management function which is specified by the IEEE 802.11n standard, the power saving state makes it possible to operate only one radio equipment unit to achieve power saving. However, it is not specified as to which radio equipment unit is to be operated out of the multiple radio equipment units- Depending on the radio equipment unit operated in the power saving state, communications quality in the power saving state could become very poor.

With respect to the radio communications apparatus using the MIMO technique, it is being proposed to operate, in a receive wait state, one radio equipment unit only and stop receive operations of the other radio equipment units out of multiple radio equipment units for the purpose of reducing consumed power in the receive wait state (for example, see Patent document 1). Moreover, even in a receive state, a feature is being proposed to operate a necessary minimum of radio equipment units to reduce the consumed power in order to receive a spatially-multiplexed signal using MIMO transmission.

However, when the one only radio equipment unit is operated in the power saving state, the radio communications quality may become low.

### Patent documents

Patent Document 1: JP2006-42075A

The present invention aims to provide a radio communications apparatus and method which make it possible to improve radio communications quality in a power saving state.

According to an embodiment of the present invention, a radio communications apparatus having multiple radio equipment units is provided, the radio communications apparatus including: a radio equipment selecting unit which selects one of the radio equipment units based on a received quality in each of the radio equipment units when transferring to a power saving state; and a radio equipment control unit which operates the radio equipment unit selected by the radio equipment selecting unit and stops a radio equipment unit other than the selected radio equipment unit.

According to another embodiment of the present invention, a method in a radio communications apparatus having multiple radio equipment units is provided, including: the radio equipment unit selecting step of selecting one of the radio equipment units based on a received quality in each of the radio equipment units when transferring to a power saving state; and the radio equipment unit control step of operating the radio equipment unit selected by the radio equipment unit selecting step and stopping a radio equipment unit other than the radio equipment unit.

The disclosed radio communications apparatuses and methods make it possible to improve radio communications quality in a power saving state.

### BRIEF DESCRIPTION OF THE DRAWINGS

Other objects, features, and advantages of the present invention will become more apparent from the following detailed descriptions when read in conjunction with the accompanying drawings, in which:
FIG. 1 is a configuration diagram illustrating one example of a system according to an embodiment of the present invention;
FIG. 2 is a configuration diagram illustrating one example of a radio communications apparatus according to an embodiment of the present invention;
FIG. 3 is a functional block diagram illustrating an example of a function of the radio communications apparatus according to an embodiment of the present invention;
FIG. 4 is a sequence chart illustrating an operation of the radio communications apparatus according to an embodiment of the present invention; and
FIG- 5 is a sequence chart illustrating an operation of the radio communications apparatus according to an embodiment of the present invention.

### BEST MODE FOR CARRYING OUT THE INVENTION

In the following, best modes for carrying out the invention are described based on the following embodiments with reference to the drawings.

Throughout the drawings for explaining the embodiments, same letters are used for those elements having the same functions, so that repetitive explanations are omitted.

### System

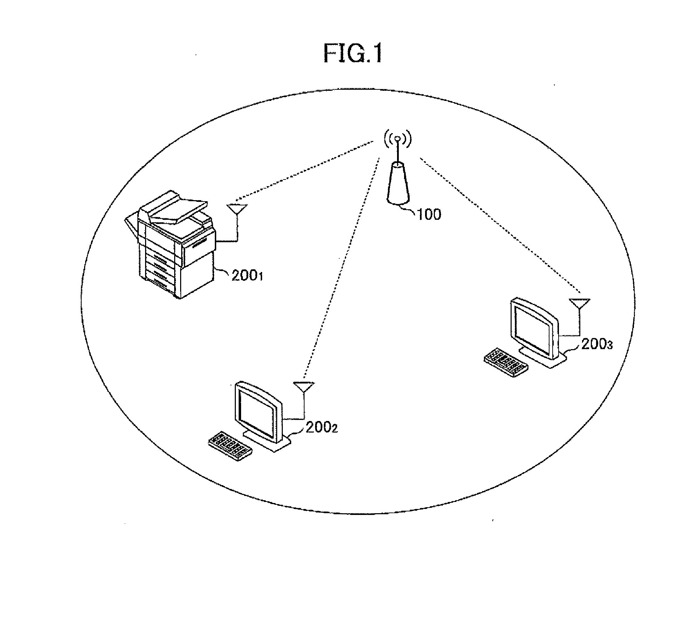

FIG. 1 shows one example of a system to which is applied a radio communications apparatus 200 according to the present embodiment. The system includes an access point 100, and the radio communications apparatuses 200ₙ (where n is an integer greater than 0) which conduct radio communications with the access point 100. While one access point 100 is shown in FIG. 1, the access point 100 may exist in multiple numbers. Moreover, FIG. 1 shows a case of n=-3. However a case of n=1, a case of n=2, or a case of 4≦n may be shown. Below the radio communications apparatus 200ₙ may be simply called "the radio communications apparatus 200". The radio communications apparatus 200 is provided with multiple radio interfaces. Moreover, the radio communications apparatus 200 implements multiple radio equipment units. The radio communications apparatus 200 uses a MIMO communications technique to conduct radio communications.

The __access point 100 and the radio communications apparatus 200 conduct radio communications according to a specification of a wireless LAN (local area network). For example the radio communications are conducted according to IEEE 802.11n. The present embodiment, which shows an example such that the radio communications are carried out according to IEEE 802.11n, is applicable to a radio communications apparatus which conducts radio communications using a MIMO communications technique.

### Radio communications apparatus

The radio communications apparatus 200 implements a power saving function. In a power saving state, only one radio equipment unit is operated, while operations of the other radio equipment units are stopped. In other words, in the power saving state, one transmitting equipment unit and one receiving equipment unit are operated, while operations of the transmitting and receiving equipment units other than the one transmitting and one receiving equipment units are stopped.

When transferring to the power saving state, the radio communications apparatus 200 reports, to the access point 100, the transferring to the power saving state. After a response is received to the report of transferring to the power saving state, the radio communications apparatus 200 transfers to the power saving state.

The radio communications apparatus 200 operates according to a power management function specified in the IEEE 802.11n standard. The process shown below is conducted for operating according to the power management function:'

When transferring to the power saving state, a radio equipment unit to be used is selected. The radio equipment unit to be used is selected based on received quality in each of the radio equipment units. For example, a radio equipment unit with the best received quality is selected. As an indicator of radio quality, a packet error rate may be used. Moreover, as the received quality, a SN ratio (SNR: a signal-to-noise ratio) may be used, or received signal strength may be used.

A radio equipment unit with the best received quality based on received quality in each of the radio equipment units is selected to achieve the best radio communications quality even in the power saving state.

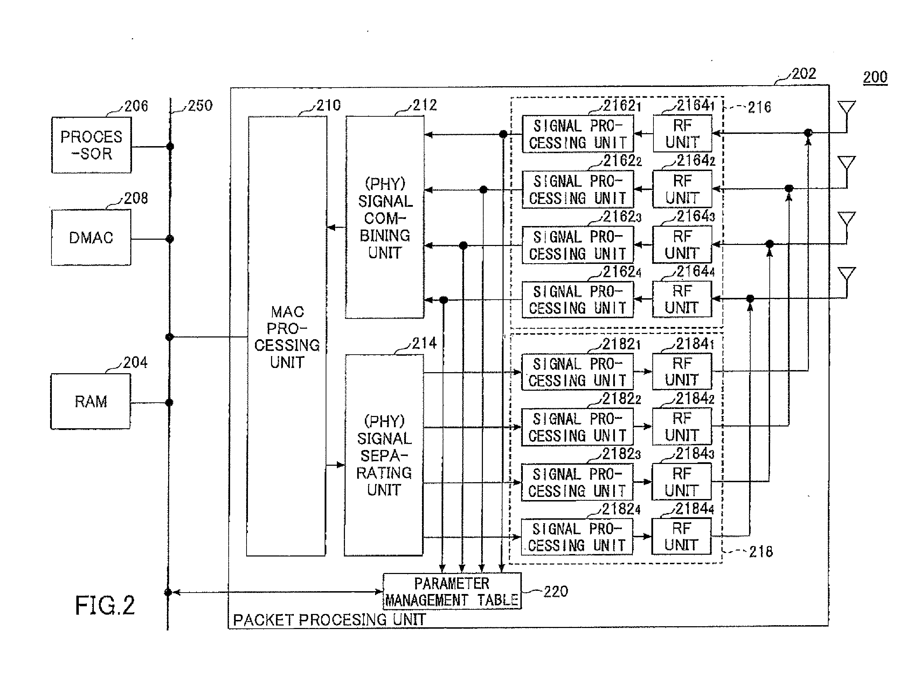

FIG. 2 shows a radio communications apparatus 200 according to the present embodiment. FIG. 2 mainly shows a hardware configuration. As an example, FIG. 2 shows the radio communications apparatus 200 having four antennas. The radio communications apparatus 200 may have two, three, or more than four antennas- In other words, it has multiple antennas.

Moreover, FIG. 2 shows, as an example, the radio communications apparatus 200 having four transmitting and receiving equipment units. The radio communications apparatus 200 may have two, three, or more than four transmitting and receiving equipment units. In other words, it has multiple transmitting and receiving equipment units. Moreover, the number of transmitting equipment units may differ from the number of receiving equipment units.

The radio communications apparatus 200 has a packet processing unit 202. The packet processing unit 202 modulates a packet input thereto. The packet processing unit 202 wirelessly transmits the modulated packet at an appropriate time specified in the IEEE 802.11n. Moreover, the packet processing unit 202 demodulates a packet received with an antenna, provides a predetermined process, and then outputs the processed result.

The radio communications apparatus 200 has a memory 204.

The memory 204 may be a random access memory (RAM). The memory 204 temporarily stores a packet to be communicated wirelessly. Moreover, the memory 204 temporarily stores a packet received.

The radio communications apparatus 200 has a processor 206. The processor 206 may be configured with a processor dedicated to embedding, for example. The processor 206 performs processes other than a process performed by the packet processing unit 202. For example, the processor 206 performs a process related to transmit data and a process related to time.

The radio communications apparatus 200 has a direct memory access controller (DMAC: direct memory access controller) 208. The direct memory access controller 208 conducts control for transferring, to the packet processing unit 202, a packet stored in the memory 204. Moreover, the direct memory access controller 208 conducts control for transferring, to the memory 204, data from the packet processing unit 202.

The above-described configuration of the radio communications apparatus 200 is exemplary, and can be changed appropriately. Moreover, the above-described radio communications apparatus 200 shows a minimum number of blocks needed to configure the system. Other system configurations may be adopted.

### Packet processing unit

The packet processing unit 202 has a MAC (media access control) processing unit 210. The MAC processing unit 210 conducts control of a data link layer of an OSI (open system interconnection) reference model. The MAC processing unit 210 performs determining of a time within which a packet can be transmitted, encrypting and decrypting a packet, and processing and extracting a packet to perform a process of providing a transmit instruction to a signal separating unit 214.

The packet processing unit 202 has the signal separating unit 214. The signal separating unit 214 is connected to the MAC processing unit 210. The signal separating unit 214 separates a packet to be input by the MAC processing unit 210. The separated packets (below called "separated packets") are respectively input to signal processing units 2182₁-2182₄.

The packet processing unit 202 has a group of transmitting equipment units 218. The group of transmitting equipment units 218 has the signal processing units 2182₁-2182₄ and RF units 2184₁-2184₄. One transmitting equipment unit may include one of the signal processing units 2182₁-2182₄ and one of the RF units 2184₁-2184₄. The signal processing units 2182₁-2182₄ modulate separated packets to be input by the signal separating unit 214. The signal processing units 2182₁-2182₄ convert the modulated separated packets into analog data sets. The analog data sets are respectively input to the RF units 2184₁-2184₄. The RF units 2184₁-2184₄ convert the analog data sets to radio signals. The radio signals are transmitted from the antennas.

The packet processing unit 202 has a group of receiving equipment units 216. The group of receiving equipment units 216 has signal processing units 2162₁-2162₄ and RF units 2164₁-2164₄. One of the receiving equipment units may include one of the signal processing units 2162₁-2162₄ and one of the RF units 2164₁-2164_{4.} The RE units 2164₁-2164₄ convert radio packets received by the respective antennas into analog data sets. The analog data sets are input into the respective signal processing units 2162₁-2162₄. The signal processing units 2162₁-2162₄ convert the analog data sets to digital data sets. The signal processing units 2162₁-2162₄ demodulate the digital data sets. The demodulated digital data sets are input to a signal combining unit 212.

The packet processing unit 202 has the signal combining unit 212. The signal combining unit 212 is connected to the signal processing units 2162₁-2162₄. The signal combining unit 212 combines radio packets input from the signal processing units 2162₁-2162₄ to generate one packet. The packet is input to the MAC processing unit 210.

The packet processing unit 202 has a parameter management table 220. The parameter management table 220 stores and manages therein parameters of each of the receiving equipment units. Information indicating received quality from the signal processing units 2162₁-2162₄ is input to the parameter management table 220. The information indicating the receive quality includes a packet error rate (PER), a SNR (signal noise ratio), and signal received strength. Moreover, an average of an arbitrary time of the packet error rate, the SNR, and the signal received strength may be included.

In the radio communications apparatus 200 shown in FIG. 2, the memory 204, the processor 206, the DMAC 208, the MAC processing unit 210, and the parameter management table 220 are mutually connected with a bus 250.

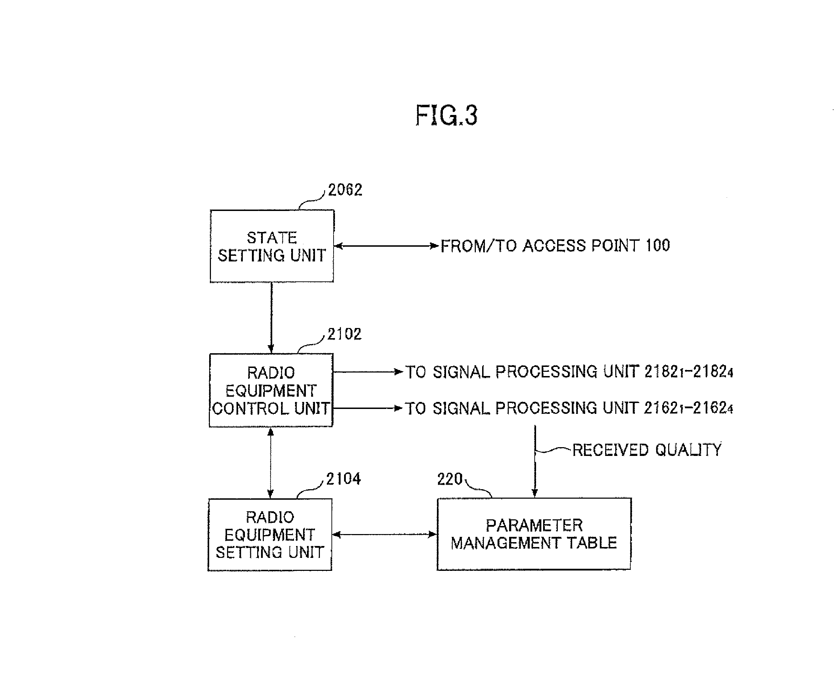

FIG. 3 shows a function of the radio communications apparatus 200.

The radio communications apparatus 200 has a state setting unit 2062. When the radio communications apparatus 200 transfers to the power saving state, the state setting unit 2062 reports to the access point 100 the transferring to the power saving state. When a response is received from the access point 100, the state setting unit 2062 conducts setting such as to transfer to the power saving state. For example, when a response is received from the access point 100, the state setting unit 2062 reports, to a radio equipment unit 2102, the transferring to the power saving state. If the response could not be responded to, a packet is wirelessly transmitted for reporting once again the transferring to the power saving state. The processor 206 functions as the state reporting unit 2062.

The radio communications apparatus 200 has the radio equipment control unit 2102. The radio equipment control unit 2102 is connected to the state setting unit 2062. When the transferring to a power saving state is reported by the state setting unit 2062, the radio equipment control unit 2102 conducts control for transferring to the power saving state. For example, the radio equipment control unit 2102 selects one of the transmitting equipment units. For example, the radio equipment control unit 2102 selects any one of the signal processing units 2182₁-2182₄. Below, the transmitting equipment unit selected is called a selected transmitting equipment unit. Moreover, the radio control unit 2102 selects one of the receiving equipment units which corresponds to the selected transmitting equipment unit. The radio equipment control unit 2102 selects any one of the signal processing units 2162₁-2162₄. Below, the receiving equipment unit which corresponds to the selected transmitting equipment unit is a selected receiving equipment unit. The radio equipment control unit 2102 causes the selected transmitting equipment unit to transmit a signal for causing the access point 100 to transmit a signal for measuring received quality.

The selected receiving equipment unit measures the received quality of the signal transmitted by the access point 100. The received quality may be measured at an arbitrary time. For example, the received quality may be measured by any one of the signal processing units 2162₁-2162₄. The measuring time may be preset or may be arranged to be set by a user. The radio communications apparatus 100 may be provided with a register dedicated for setting the measuring time. The dedicated register makes it possible for a user to provide time information to the radio communications apparatus 200. The received quality measured by any one of the signal processing units 2162₁-2162₄ is input to the parameter management table 220. The parameter management table 220 stores the received quality input by the one of the signal processing units 2162₁-2162₄, the received quality being collated with the one of the signal processing units 2162₁-2162₄ which has measured the received quality.

When a measurement of a received quality by the selected receiving equipment unit is completed, the radio equipment control unit 2102 stops operations of the selected transmitting and receiving equipment units. A transmitting equipment unit is selected from the transmitting equipment units other than the transmitting equipment unit stopped. Moreover, the radio equipment control unit 2102 selects a receiving equipment unit which corresponds to the selected transmitting equipment unit. The radio equipment control unit 2102 causes the selected transmitting equipment unit to transmit a signal for causing the access point 100 to transmit a signal for measuring received quality.

The selected receiving equipment unit measures the received quality of the signal transmitted by the access point. For example, the received quality may be measured by any one of the signal processing units 2162₁-2162₄- The received quality measured by any one of the signal processing units 2162₁-2162₄ is input to the parameter management table 220. The parameter management table 220 stores the received quality input by any of the signal transmitting units 2162₁-2162₄, the received quality being collated with the signal processing unit which has measured the received quality.

The radio equipment control unit 2102 also conducts similar control for the remaining two transmitting and receiving equipment units. When measurement of the received quality is completed for all of the transmitting equipment units, the radio equipment control unit 2102 reports, to a radio equipment setting unit 2104, that the measurement of the received quality has been completed.

The radio communications apparatus 200 has the radio equipment setting unit 2104. The radio equipment setting unit 2104 is connected to the radio equipment control unit 2102 and the parameter management table 220. When it is reported that the measurement of the received quality has been completed by the radio equipment control unit 2102, the radio equipment setting unit 2104 refers to the parameter management table 220 and selects one of the receiving equipment units which may obtain the best received quality out of received qualities stored in the parameter management table 220. The radio equipment setting unit 2104 selects such a receiving equipment unit and a transmitting equipment unit corresponding to such a radio equipment unit as receiving and transmitting equipment units for use in transferring to the power saving state. The radio equipment setting unit 2104 reports, to the radio equipment control unit 2102 as radio equipment unit information, the receiving equipment unit and the transmitting equipment unit for use in transferring to the power saving state. The radio equipment control unit 2102 operates the receiving and transmitting equipment units included in the radio equipment unit information reported by the radio equipment setting unit 2104. Operations of receiving and transmitting equipment units other than the above-mentioned receiving and transmitting equipment units are stopped.

When it is determined to return to a normal operating state from the power saving state, the state setting unit 2062 reports, to the access point 100, that it is returning to the normal operating state. When a response is received from the access point 100, the state setting unit 2062 conducts setting such as to return to the normal operating state. For example, when a response is received from the access point 100, the state setting unit 2062 reports, to the radio equipment control unit 2102, the returning to the normal operating mode. If the response cannot be received, a radio packet is transmitted for reporting the returning to the normal operating state once again.

Moreover, if a packet is received from the access point 100, it may be determined to return to the normal operating state. For example, if a packet is received from the access point 100 without reporting the returning to the normal operating state, the state setting unit 2062 reports, to the radio equipment control unit 2102, the returning to the normal operating state.

When the returning to the normal operating state is reported by the state setting unit 2062, the radio equipment control unit 2102 conducts control for returning to the normal operating state. For example, the radio equipment control unit 2102 operates all of the transmitting equipment units. For example, the radio equipment control unit 2102 operates the signal processing units 2182₁-2182₄. Moreover, for example, the radio equipment control unit 2102 operates all of the receiving equipment units. For example, the radio equipment control unit 2102 operates the signal processing units 2162₁-2162₄.

### Operation of the radio communications apparatus 200

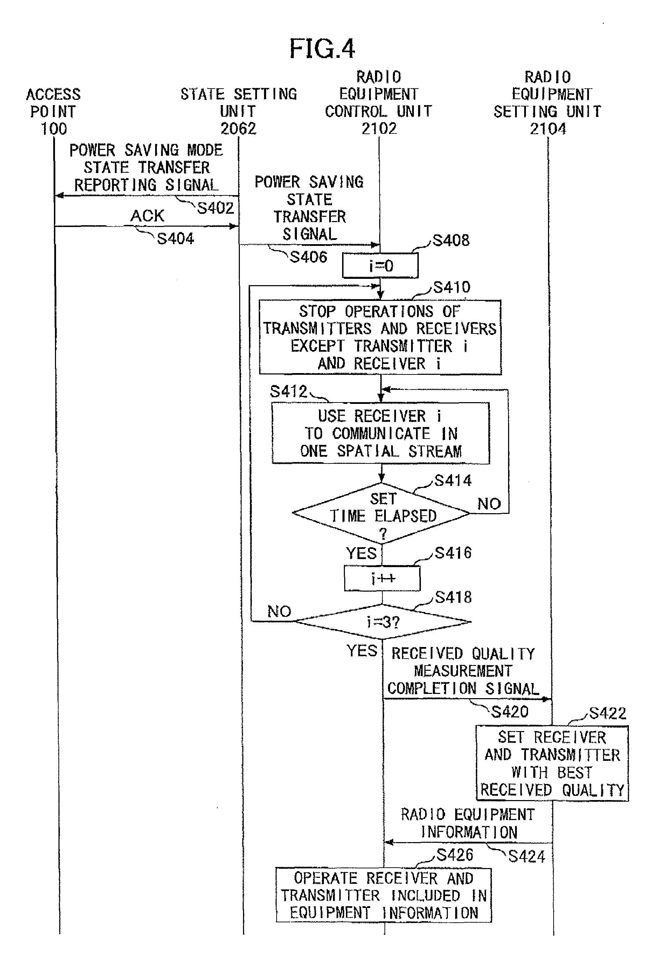

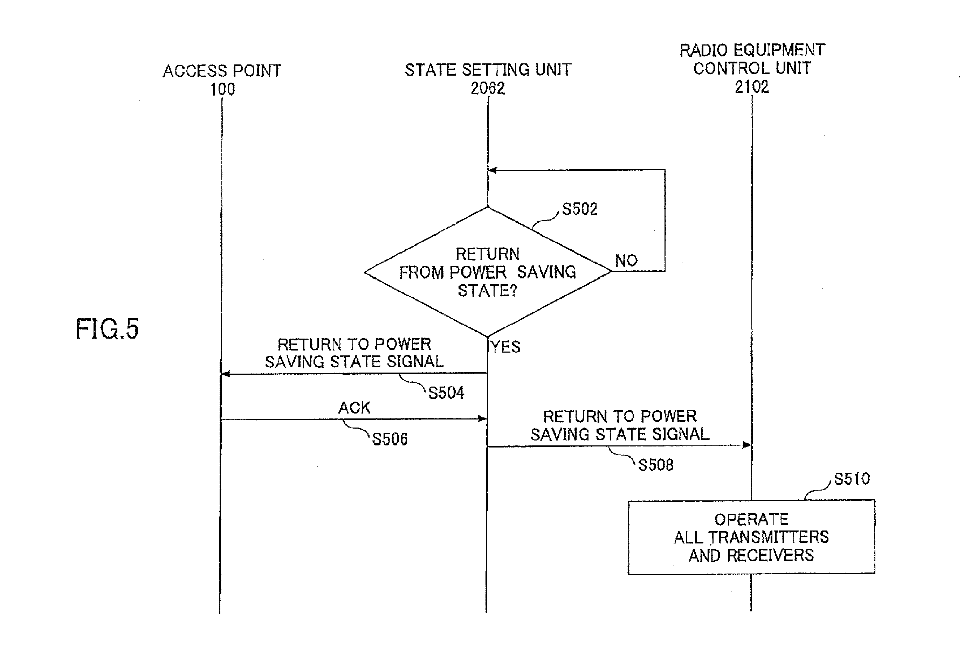

FIGS. 4 and 5 are sequence charts showing an example of the radio communications apparatus 200. FIGS. 4 and 5 primarily show internal processing of the radio communications apparatus 200.

### For transferring from the normal operating state to the power saving state

FIG. 4 shows an example of operations for transferring from the normal operating state to the power saving state.

When it is determined to transfer to the power saving state, the radio communications apparatus 200 reports, to the access point 100, the transferring to the power saving state (step S402). For example, the state setting unit 2062 reports, to the access point 100, the transferring to the power saving state.

When a response is received from the access point 100 to a signal for reporting the transferring to the power saving state, the radio communications apparatus 200 transfers to the power saving state (step S404). For example, the state setting unit 2062 transfers to the power saving state when a response (e.g., an acknowledgement (ACK)) is received from the access point 100.

The radio communications apparatus 200 starts a process of transferring to the power saving state (step 406). For example, for transferring to the power saving state, the state setting unit 2062 reports, to the radio equipment control unit 2102, the transferring to the power saving state.

The radio communications apparatus 200 sets a count value i (i is 0, 1, 2, or 3) to 0 (step S408), For example, the radio equipment control unit 2102 sets the count value of the receiving equipment unit to 0.

The radio communications apparatus 200 stops operations of transmitting and receiving equipment units other than a transmitting equipment unit i and a receiving equipment unit i (step S410). For example, the radio equipment control unit 2102 stops operations of transmitting and receiving equipment units other than the transmitting equipment unit i and the receiving equipment unit i.

The radio communications apparatus 200 uses the receiving equipment unit i to conduct communications in one spatial stream (step S412). For example, the radio equipment control unit 2102 causes the receiving equipment unit i to receive a signal transmitted by the access point 100. At the time of the receiving, received quality is measured. The received quality is stored in the parameter management table 220. The received quality may be a packet error rate, an SNR, or received signal strength. A signal which urges transmitting of a signal for measuring received quality may be transmitted from the transmitting equipment unit i to the access point 100. The access point 100 transmits a signal for measuring the received quality.

The radio communications apparatus 200 determines whether a time set has elapsed (step S414). For example, the radio equipment control unit 2102 determines whether the time set has elapsed. The time set may be preset or may be set by a user.

If it is determined that the time set has not elapsed (step S414: NO), the process returns to step S412. Until the time set has elapsed, the receiving equipment unit i receives a signal transmitted from the access point 100.

If it is determined that the time set has elapsed (step S414: YES), a count value of the receiving equipment unit i is increased (step S416). For example, it is increased by 1. For example, if it is determined that the time set has elapsed, the radio equipment control unit 2102 increases a count value of the receiving equipment unit i.

The radio communications apparatus 200 determines whether i is 3 (step S418). For example, the radio equipment control unit 2102 determines whether i is 3.

If it is not determined that i is 3 (step S418: NO), the process returns to step S410. The process of steps S410-S416 is performed for all of the transmitting and receiving equipment units.

If it is determined that i is 3 (step S418: YES), the radio communications apparatus 200 completes measuring received quality (step S420). For example, if it is determined that i is 3, the radio equipment control unit 2102 inputs a received quality measurement completion signal to the radio equipment setting unit 2104.

The radio communications apparatus 200 selects and sets receiving and transmitting equipment units with the best received quality (step S422). For example, the radio equipment setting unit 2104 refers to a corresponding relationship between a receiving equipment unit stored in the parameter management table 220 and a received quality by the receiving equipment unit to select the receiving equipment unit with the best received quality. Moreover, a transmitting equipment unit corresponding to the receiving equipment unit with the best received quality is selected.

For example, if a packet error rate is measured as the received quality, the receiving equipment unit with the minimum packet error rate is selected. Moreover, for example, if SNR and a received signal strength are measured as received qualities, the receiving equipment unit with the maximum SNR and the received signal strength is selected.

The radio communications apparatus 200 sets a receiving equipment unit with the best received quality and a transmitting equipment unit corresponding to the receiving unit with the best received quality (step S424). For example, the radio equipment setting unit 2104 inputs, to the radio equipment control unit 2102, radio equipment unit information including the received equipment unit with the best received quality and the transmitting equipment unit corresponding to the receiving equipment unit with the best received quality.

The radio communications apparatus 200 operates the receiving equipment unit with the best received quality and the transmitting equipment unit corresponding to the receiving equipment unit with the best received quality (step S426). For example, the radio equipment control unit 2102 operates the receiving equipment unit with the best received quality included in the radio equipment unit information reported by the radio equipment setting unit 2104, and the transmitting equipment unit corresponding to the receiving equipment unit with the best received quality.

### For transferring from the power saving state to the normal operating state

FIG. 5 shows an example of operation for transferring from the power saving state to the normal operating state.

The radio communications apparatus 200 determines whether to return from the power saving state (step S502). For example, if a packet is transmitted from the access point 100 to the radio communications apparatus 200, it may determine to return from the power saving state. For example, the state setting unit 2062 determines whether to return from the power saving state.

If it is determined not to return from the power saving state (step S502: NO), the process returns to step S502. It may be determined whether to return from the power saving state periodically or aperiodically.

If it is determined to return from the power saving state (step S502: YES), the radio communications apparatus 200 reports, to the access point 100, the determination to return from the power saving state (step S504). For example, the state setting unit 2062 reports, to the access point 100, the returning from the power saving state.

The radio communications apparatus 200 receives a response to a signal reporting the returning from the power saving state (step S506). For example, the state setting unit 2062 receives a response from the access point 100.

The radio communications apparatus 200 starts a process of returning from the power saving state (step 508). For example, for returning from the power saving state, the state setting unit 2062 reports, to the radio equipment control unit 2102, the returning from the power saving state.

The radio communications apparatus 200 operates all of the transmitting and receiving equipment units (step S510). For example, when the returning from the power saving state is reported, the radio equipment control unit 2102 operates all of the transmitting and receiving equipment units.

In the present embodiment, a packet error rate, an SNR value, or received signal strength may be obtained as a parameter value for use when selecting one of the receiving equipment units to be used in the power saving state. The radio communications apparatus 200 may select a receiving equipment unit to be used using a comprehensive decision method with a combination of the packet error rate, the SNR value, and the received signal strength. For example, the parameters may be weighted based on an environment in which the radio communications apparatus 200 is used.

Moreover, when selecting a receiving equipment unit to be used in transferring to the power saving state, it may be arranged for a user to be able to set a parameter to be used. A register dedicated for the user to be able to set the parameter may be implemented.

Moreover, in the present embodiment, while an example has been explained of a case such that the processor 2096 has a function of the state setting unit 2062, and the MAC processing unit 210 has functions as the radio equipment control unit 2102 and the radio equipment setting unit 2104, they can be modified appropriately.

In the above-described embodiment, for a case of transferring to the power saving state for the second time or more, and the radio communications apparatus 200 belongs to the same network as when it previously transferred to the power saving state, the radio equipment unit to be used may be selected based on a received quality stored in the parameter management table. Moreover, for a case of transferring to the power saving state for the second time or beyond, and the radio communications apparatus 200 belongs to the same network as when it previously transferred to the power saving state, the radio equipment unit to be used may be selected using the above-described procedure.

According to the present embodiment, one each of the transmitting equipment unit and the receiving equipment unit may be used, when transferring to the power saving state, to reduce consumed power. Moreover, only transmitting and receiving equipment units with the best received quality may be operated to achieve the best communications quality in the power saving state. Moreover, according to the present embodiment, a radio communications apparatus using the MIMO technique may maintain the best communications quality within the possible range even in the power saving state to conduct communications. This is because, when transferring to the power saving state, PER values of the radio equipment units measured or PER values measured during a preset period may be compared to select the radio equipment unit with the minimum PER value to make it possible to stop operations of those other than the selected radio equipment unit.

In the above-described embodiment, multiple of the transmitting and receiving equipment units may be selected when transferring to the power saving state. The number of the multiple transmitting and receiving equipment units may be less than the number of all transmitting and receiving equipment units. Multiple transmitting and receiving equipment units may be selected to reduce consumed power relative to a case such that all of the transmitting and receiving equipment units are used. Moreover, even when multiple transmitting and receiving equipment units are selected, transmitting and receiving equipment units to be used may be selected based on the received quality to improve received quality in the power saving state.

According to one embodiment of the present invention, a radio communications apparatus having multiple radio equipment units is provided, the radio communications apparatus including:
a radio equipment selecting unit which selects one of the radio equipment units based on a received quality in each of the radio equipment units when transferring to a power saving state; and
a radio equipment control unit which operates the radio equipment unit selected by the radio equipment selecting unit and stops a radio equipment unit other than the selected radio equipment unit.

The received quality in the power saving state may be improved.

The radio communications apparatus further includes
a radio equipment switching unit as a radio control unit which operates each of the multiple radio equipment units, and
a received quality obtaining unit as a signal processing unit which obtains a received quality measured by the radio equipment unit being operated with the radio equipment switching unit, wherein
the radio equipment selecting unit selects the radio equipment unit based on the received quality obtained by the received quality obtaining unit.

The received quality at each of the receiving equipment units may be obtained.

In the radio communications apparatus, the received quality further includes at least one of a packet error rate, an SNR, and received signal strength.

A radio equipment unit to be used in the power saving state may be selected based on at least one of the packet error rate, the SNR, and the received signal strength

The radio communications apparatus further includes
a used received quality setting unit which sets a received quality to be used when selecting the radio equipment unit by the radio equipment selecting unit.

The radio equipment unit to be used in the power saving state may be selected based on a received quality set.

The radio communications apparatus further includes
a measured time setting unit which sets a measured time for measuring the received quality by the radio equipment unit.

The received quality may be measured according to the measured time set.

According to another embodiment of the present invention, a method in a radio communications apparatus having multiple radio equipment units is provided, including:
the radio equipment unit selecting step of selecting one of the radio equipment units based on a received quality in each of the radio equipment units when transferring to a power saving state; and
the radio equipment unit control step of operating the radio equipment unit selected by the radio equipment unit selecting step and stopping a radio equipment unit other than the selected radio equipment unit.

As described above, while the present invention has been described with reference to specific embodiments, the respective embodiments are merely examples, so that a skilled person will understand variations, modifications, alternatives, replacements, etc. For convenience of explanation, while the apparatuses according to the embodiments of the present invention have been explained using functional block diagrams, such apparatuses as described above may be implemented in hardware, software, or a combination thereof. The present invention is not limited to the above embodiments, so that variations, modifications, alternatives, and replacements are included in the present invention without departing from the spirit of the present invention.

The present application is based on Japanese Priority Application No. 2010―138316 filed on June 17, 2010, the entire contents of which are hereby incorporated by reference.

## Claims

1. A radio communications apparatus having multiple radio equipment units, the radio communications apparatus comprising:
a radio equipment selecting unit which selects one of the radio equipment units based on a received quality in each of the radio equipment units when transferring to a power saving state; and
a radio equipment control unit which operates the one of the radio equipment units selected by the radio equipment selecting unit and stops another of the radio equipment units other than the selected one of the radio equipment units.

2. The radio communications apparatus as claimed in claim 1, further including
a radio equipment switching unit which operates the multiple radio equipment units, and
a received quality obtaining unit which obtains a received quality measured by the one of the radio equipment units being operated with the radio equipment switching unit, wherein
the radio equipment selecting unit selects the one of the radio equipment units based on the received quality obtained by the received quality obtaining unit.

3. The radio communications apparatus as claimed in claim 1, wherein
the received quality includes at least one of a packet error rate, an SNR, and a received signal strength.

4. The radio communications apparatus as claimed in claim 3, further including
a received quality setting unit which sets a received quality to be used when selecting the one of the radio equipment units by the radio equipment selecting unit.

5. The radio communications apparatus as claimed in claim 2, further including
a measured time setting unit which sets a measured time for measuring the received quality by the one of the radio equipment units.

6. A method in a radio communications apparatus having multiple radio equipment units, comprising:
a radio equipment unit selecting step of selecting one of the radio equipment units based on a received quality in each of the radio equipment units when transferring to a power saving state; and
a radio equipment unit control step of operating one of the radio equipment units selected by the radio equipment unit selecting step and stopping another of the radio equipment units other than the one of the radio equipment units.
